# EUROPÄISCHE PATENTSCHRIFT

(11) **EP 4 399 125 B1**
(45) Veröffentlichungstag und Bekanntmachung des Hinweises auf die Patenterteilung: **06.05.2026**
(21) Anmeldenummer: 22773221.1
(22) Anmeldetag: 05.09.2022
(51) Int. Cl.: B60Q 3/208, B60Q 3/62, B60Q 3/64, B60Q 3/66, B60Q 3/74, B32B 17/10, B60Q 3/54, F21V 8/00

(54) **FAHRZEUGSCHEIBE MIT EINER BELEUCHTUNGSEINRICHTUNG**
VEHICLE WINDOW PANEL WITH A ILLUMINATION DEVICE
VITRE DE VEHICULE AVEC UN DISPOSITIF D'ILLUMINATION

(30) Priorität: 06.09.2021 DE 102021122986
(43) Veröffentlichungstag der Anmeldung: 17.07.2024
(73) Patentinhaber: Webasto SE, 82131 Stockdorf (DE)
(72) Erfinder: ROSSMAIR, Georg, 82131 Stockdorf (DE); HOFNER, Marco, 82131 Stockdorf (DE); STEIGTHALER, Michael, 82131 Stockdorf (DE)
(74) Vertreter: Kilian Kilian & Partner mbB
(86) Internationale Anmeldenummer: PCT/EP2022/074621
(87) Internationale Veröffentlichungsnummer: WO 2023/031460

(56) Entgegenhaltungen:
- WO-A1-2008/016978
- WO-A1-2018/219657
- DE-A1- 102012 109 900
- DE-A1- 102015 000 071
- DE-A1- 102018 004 528
- DE-A1- 102019 206 376
- DE-A1- 102020 101 875
- DE-B3- 102020 109 338
- DE-U1- 202014 104 932
- FR-A1- 2 984 251
- US-A1- 2004 130 882
- US-A1- 2014 169 034

## Beschreibung

Die Erfindung betrifft eine Fahrzeugscheibe mit einer scheibeninnenseitigen Lichtleitschicht und mit einer Beleuchtungseinrichtung, die Licht mittels einer Lichteinkoppeleinrichtung in die Lichtleitschicht einleitet.

Aus der DE 10 2020 109 338 B3 ist eine gattungsgemäße Fahrzeugscheibe bekannt geworden und beschreibt eine Fahrzeugscheibe gemäß dem Oberbegriff von Anspruch 1.

Eine Beleuchtungseinrichtung der Fahrzeugscheibe weist eine Lichtquelle auf, die an einer Stirnseite eines länglichen stabförmigen Lichtleiters, der z. B. aus PMMA oder PC hergestellt ist, angeordnet ist. Die Beleuchtungseinrichtung weist weiterhin ein leistenartiges Lichteinkoppelelement mit einem im Querschnitt keilförmigen Körper auf. Das Lichteinkoppelelement, das aus einem Kunststoffwerkstoff wie z. B. PMMA hergestellt ist, wie auch der Lichtleiter erstrecken sich über die Länge der Beleuchtungseinrichtung, wobei der Lichtleiter unmittelbar vor einer seitlichen länglichen Stirnfläche des Lichteinkoppelelements angeordnet ist. Das Lichteinkoppelelement ist über eine Verklebung an einer Innenseite einer Lichtleitschicht befestigt, die von einer Innenscheibe der mehrschichtigen Fahrzeugscheibe gebildet ist. Bei einem solchen langen Lichteinkoppelelement können jedoch in der Verklebung hohe Spannungen auftreten, die bei Temperaturänderungen und unterschiedlichen Wärmeausdehnungskoeffizienten des Glasmaterials der Lichtleitschicht und des Kunststoffmaterials des Lichteinkoppelelements ein Ablösen der Verklebung verursachen können.

Der Erfindung liegt die Aufgabe zugrunde, eine eingangs genannte Fahrzeugscheibe zu schaffen, die hinsichtlich der Beleuchtungseinrichtung verbessert ist, sowie ein Verfahren zum Herstellen einer solchen Fahrzeugscheibe anzugeben. Diese Aufgabe wird durch eine Fahrzeugscheibe mit den Merkmalen gemäß Anspruch 1 gelöst.

Die Aufgabe wird auch durch ein Verfahren mit den Merkmalen des Anspruchs 13 sowie durch ein Verfahren mit den Merkmalen des Anspruchs 14 gelöst.

Vorteilhafte Ausgestaltungen der Erfindung sind in den abhängigen Ansprüchen angegeben.

Bei der erfindungsgemäßen Fahrzeugscheibe sind somit mehrere Einheiten, die eine LED und ein zugeordnetes Lichteinkoppelelement enthalten, nebeneinander in Längsrichtung der Beleuchtungseinrichtung angeordnet. Insbesondere sind mehrere Lichteinkoppelelemente wie z. B. etwa 10 bis 40 Lichteinkoppelelemente nebeneinander in Reihe und vorzugsweise voneinander beabstandet angeordnet. Die Anordnung einer Mehrzahl einzelner Lichteinkoppelelemente gestattet eine verbesserte Anpassung an eine Wölbung der Fahrzeugscheibe in Längsrichtung bzw. in Richtung der sich längs erstreckenden Beleuchtungseinrichtung. Insbesondere bei aus Glas hergestellten Lichteinkoppelelementen ist diese verbesserte Anpassung von Vorteil, da sich ein leistenartiges und in der Länge der Beleuchtungseinrichtung gebildetes Lichteinkoppelelement aus hartem Glasmaterial aufgrund geringerer Biegbarkeit oder schwieriger Herstellung von gekrümmten oder gewölbten langen Glas-Lichteinkoppelelementen oder Glasprismen für eine solche Anpassung an eine Wölbung weniger eignet.

Des Weiteren können die einzelnen Lichteinkoppelelemente jeweils mit ihrer Gestaltung und mit ihren Lichtreflexionsflächen auf eine optimierte Lichtführung in die Lichtleitschicht hin ausgelegt werden.

Gemäß einer ersten Ausführungsform ist vorgesehen, dass die Lichteinkoppelelemente an der Lichtleitschicht als eigenständige Bauteile befestigt sind. Die als eigenständige Bauteile hergestellten Lichteinkoppelelemente sind insbesondere mittels Verklebung, mittels Vergussmaterial, mittels Klebeband oder mittels einer Halte- oder Klemmeinrichtung an der Lichtleitschicht befestigt.

Die Lichteinkoppelelemente sind insbesondere keilförmig oder als prismatische Körper gebildet. Die Lichteinkoppelelemente können aus Glas oder aus einem Kunststoffmaterial wie z. B. PMMA, PC, PU oder COP (cyclic olefin polymer) oder COC (cyclic olefin copolymer) hergestellt sein.

Als Werkstoff einer Verklebung kann ein drucksensitiver Kleber, ein optisch klarer Flüssigkleber, EVA, PVB, TPU, ein Epoxy-Kleber oder ein Acrylat-Kleber zum Einsatz kommen. Eine Halte- oder Klemmeinrichtung ist z.B. an der Fahrzeugscheibe angebracht, z. B. mittels einer Randanschäumung der Fahrzeugscheibe. Die Halte- oder Klemmeinrichtung bildet eine feste Befestigungsbasis für die unmittelbare oder mittelbare Anbringung der Lichteinkoppelelemente.

Die Größe der Klebefläche einer Verklebung ist somit auf die Größe einer Basisfläche der Lichteinkoppelelemente begrenzt. Insbesondere wenn die Lichtleitschicht eine Glas-Innenscheibe der Fahrzeugscheibe ist und die Lichteinkoppelelemente aus einem Kunststoffmaterial hergestellt sind, sind die Auswirkungen unterschiedlicher Wärmeausdehnungskoeffizienten der Materialien auf die einzelnen Verklebungen soweit reduziert, dass ein Ablösen der Verklebungen der einzelnen Lichteinkoppelelemente vermieden werden kann. Die Basisfläche des Lichteinkoppelelements ist insbesondere auch eine Lichtauskoppelfläche, über die von der LED eingestrahltes Licht in die Lichtleitschicht eingeleitet oder eingekoppelt wird.

Die Materialien der Lichteinkoppelelemente und der Lichtleitschicht können übereinstimmende oder ähnliche Brechungsindizes aufweisen. Bei übereinstimmenden Brechungsindizes sind die Brechungsindizes der Befestigungsmittel wie Verklebung, Vergussmaterial oder Klebeband daran angepasst bzw. stimmen mit diesen im Wesentlichen überein. Bei unterschiedlichen Brechungsindizes der Lichteinkoppelelemente und der Lichtleitschicht können die Brechungsindizes der Befestigungsmittel den Wert der Lichteinkoppelelemente oder den Wert der Lichtleitschicht oder einen dazwischen liegenden Wert aufweisen. Der Brechungsindex der Lichteinkoppelelemente liegt z. B. in einem Bereich von 1,48 bis 1,59. Der Brechungsindex der Lichtleitschicht liegt z. B. bei 1,52.

Die Lichteinkoppelelemente werden in einer Ausführungsform an der Lichtleitschicht angeordnet, beispielsweise mittels Anschäumen, Ankleben und/oder Anspritzen. Selbst wenn nachfolgend von Anschäumen die Rede ist, so soll sofern nicht technisch ausgeschlossen oder nichts anderes beschrieben ist, Anspritzen und/oder Ankleben mitgelesen werden. Zur besseren Lesbarkeit wird nachfolgend aber auf die ausdrückliche Nennung der beiden weiteren Prozesse verzichtet.

Gemäß einer weiteren Ausführungsform ist vorgesehen, dass die Lichteinkoppelelemente an der Lichtleitschicht angeschäumt sind. Die Lichteinkoppelelemente werden mit einem transparenten Schäummaterial wie z. B. PU angespritzt und weisen vorzugsweise eine hohe Lichtbrechung auf. Als Schäummaterial können auch UV-stabilisierte TPU, aliphatische TPU für hohe Transparenz oder Polyisocyanate verwendet werden.

Die Haftung des Schäummaterials und/ oder des Spritzmaterials an der z. B. aus Glas hergestellten Lichtleitschicht wird durch den Einsatz eines Haftvermittlers gewährleistet. Als Haftvermittler werden vorzugsweise licht- und UV-beständige Primer verwendet. Beispielsweise werden transparente alterungsbeständige Primer als Haftvermittler verwendet, die eine Farbechtheit gewährleisten und eine Farbverschiebung ausschließen.

Um die Lichteinkoppelelemente zu schützen, z. B. wegen Alterung der Lichteinkoppelelemente z. B. aufgrund von UV-Einwirkung oder als mechanischer Schutz usw., kann eine Schutzschicht auf das Lichteinkoppelelement aufgebracht werden. Insbesondere kommen hier solche Materialien in Betracht, die zur Herstellung der Lichteinkoppelelemente genannt sind, z. B. aliphatische Materialien wegen guter UV-Beständigkeit.

Solche angeschäumte Lichteinkoppelelemente sind individuell gestaltbar. Sie können z. B. mit Hinterschnitten oder Halterungen gebildet werden, die zur Anbringung der LEDs z. B. über einen die LEDs tragenden Träger vorgesehen sind. Auf zusätzliche Bauteile zur Anbringung der LEDs kann weitgehend oder vollständig verzichtet werden.

Die Lichteinkoppelelemente werden zweckmäßigerweise parallel zu einem Schäumvorgang angeschäumt, bei dem eine Randanschäumung der Glasscheibe aus z. B. schwarzem PU geschäumt wird. Hierdurch kann eine Optimierung der Taktzeit erzielt werden. Zusätzliche Reiniungsprozesse sind nicht erforderlich. Das Handling von komplexen Bauteilen wie der Lichteinkoppelelemente als eigenständig zu befestigende Bauteile oder von Zusatzbauteilen wie weiterer Befestigungsbauteil und dergleichen entfällt.

Gemäß einer weiteren Ausführungsform ist vorgesehen, dass die Lichteinkoppelelemente mit der Lichtleitschicht einstückig gebildet sind. Eine z. B. aus Klarglas hergestellte Lichtleitschicht enthält somit die bei der Herstellung aus demselben Glasmaterial angeformten Lichteinkoppelelemente.

Durch diese einstückige oder integrierte Bildung der Lichteinkoppelelemente mit der Lichtleitschicht entfällt eine ansonsten erforderliche Ankoppelung oder Befestigung jedes einzelnen Lichteinkoppelelements an der Lichtleitschicht. Dies gilt gleichfalls für an die Lichtleitschicht angeschäumte Lichteinkoppelelemente.

Eine Lichtleitschicht, die aus einem Kunststoffmaterial, insbesondere wie voranstehend zu den Lichteinkoppelelementen angegeben, hergestellt ist, enthält die angeformten, angeschäumten oder angespritzten Lichteinkoppelelemente aus demselben Kunststoffmaterial oder aus einem Kunststoffmaterial mit einem Lichtbrechungsindex, der demjenigen der Lichtleitschicht gleicht oder ähnlich ist.

Erfindungsgemäß ist vorgesehen, dass jedes Lichteinkoppelelement eine Basisfläche aufweist und dass jedes Lichteinkoppelelement über seine Basisfläche an einer zu einem Fahrzeuginnenraum hin gerichteten Innenfläche der Lichtleitschicht optisch angeschlossen ist. Bei einem als eigenständiges Bauteile gebildeten Lichteinkoppelelement ist die Basisfläche eine reale äußere Fläche des Lichteinkoppelelements. Bei einem an die Lichtleitschicht angeschäumten Lichteinkoppelelement ist die Basisfläche eine Kontaktfläche des angeschäumten Lichteinkoppelelements. Bei einem mit der Lichtleitschicht einstückig gebildeten Lichteinkoppelelement ist die Basisfläche eine fiktive Fläche am Übergang vom Lichteinkoppelelement zur Lichtleitschicht, wobei die fiktive Fläche im Wesentlichen parallel zur angrenzenden Oberfläche der Lichtleitschicht ist.

Die Verwendung einer Vielzahl einzelner Lichteinkoppelelemente, die in Längsrichtung ihrer Reihenanordnung jeweils mit geringer Länge gebildet sind, ermöglicht somit aufgrund der Einzelausbildung, der Einzelanformung oder der Einzelbefestigung an der Lichtleitschicht eine verbesserte Anpassung an die Wölbung der Fahrzeugscheibe.

Bei denjenigen Lichtleitelementen, die als eigenständige Bauteile über ihre Basisfläche optisch angekoppelt werden, kann zweckmäßigerweise ein Immersionsöl oder ein Kapillaröl verwendet werden, um eine optisch einwandfreie Ankoppelung zu gewährleisten.

Die Fahrzeugscheibe kann derart gebildet sein, dass sie eine Außenscheibe und eine mit der Außenscheibe mittels einer Verbindungsschicht wie z. B. einer Schmelzklebefolie verbundene Innenscheibe, z. B. einer Klarglasscheibe, aufweist. Zweckmäßigerweise bildet die Innenscheibe die Lichtleitschicht. Die Lichtleitschicht kann jedoch auch von einer anderen Schicht wie z. B. von einer Folie oder dergleichen gebildet sein.

Zweckmäßigerweise enthält die Innenscheibe eine Struktur, die bei Lichteinstrahlung in die Innenscheibe optisch hervortritt. Die Struktur ist z. B. durch Siebdruck oder Bedruckung der Innenscheibe hergestellt. Die Struktur kann z. B. ein Muster, ein Emblem oder Schrift oder Kombinationen daraus darstellen.

Erfindungsgemäß enthält jedes Lichteinkoppelelement eine zu einem benachbarten Scheibenrand gerichtete LED-Fläche und die LED ist an der LED-Fläche positioniert. Die LED-Fläche ist vorzugsweise senkrecht zur Basisfläche ausgerichtet, über die die Ankoppelung, Befestigung oder Verklebung des Lichteinkoppelelements an der Lichtleitschicht erfolgt.

Erfindungsgemäß enthält jedes insbesondere keilförmige oder prismatische Lichteinkoppelelement an den Rändern seiner Basisfläche sich gegenüber liegende Schrägseitenränder, die sich - ausgehend von einer Keilspitze des Lichteinkoppelelements - zur LED-Fläche hin gegeneinander annähern. Die Schrägseitenränder sind jeweils unter einem spitzen Winkel zu einer Verlängerung der LED-Fläche angeordnet. Die Größe des spitzen Winkels liegt im Bereich von beispielsweise 10° bis 70° und insbesondere in einem Bereich von 30° bis 45°.

Gemäß einer weiteren bevorzugten Ausführungsform ist vorgesehen, dass jedes insbesondere keilförmige oder prismatische Lichteinkoppelelement an jedem Schrägseitenrand eine vom Schrägseitenrand ausgehende Schrägreflexionsfläche aufweist, die senkrecht zur Basisfläche angeordnet ist.

Gemäß einer weiteren alternativen Ausführungsform ist vorgesehen, dass jedes insbesondere keilförmige oder prismatische Lichteinkoppelelement an jedem Schrägseitenrand eine vom Schrägseitenrand ausgehende Schrägreflexionsfläche aufweist, die eine vom Schrägseitenrand ausgehende geneigte Seitenreflexionsfläche aufweist, die unter einem spitzen Winkel zur Basisfläche angeordnet ist. Die Größe des spitzen Winkels liegt in einem Bereich von beispielsweise 35° bis 70°.

Die Lichtreflexion im Lichteinkoppelelement und damit die Qualität der Beleuchtung kann über die Gestaltung der Winkel der Schrägseitenränder und über die Neigung der zusätzlichen Seitenreflexionsflächen in einer gewünschten Weise eingestellt werden.

Durch eine Gestaltung des Lichteinkoppelelements mit solchen z. B. facettenartigen Seitenreflexionsflächen und Schrägreflexionsflächen wird Material eingespart, das ansonsten in diesen Bereichen vorhanden ist. Neben der Materialeinsparung werden aufgrund geringerer Materialmenge mögliche Wärmedehnungsspannungen im Lichteinkoppelelement reduziert.

Bei solchen Lichteinkoppelelementen, die als eigenständige Bauteile an der Lichtleitschicht befestigt sind, ist gemäß einer bevorzugten Ausführungsform vorgesehen, dass die LEDs an einem Träger befestigt sind und dass die Lichteinkoppelelemente am Träger in Zuordnung zur jeweiligen LED positioniert und befestigt sind. Der Träger ist vorzugsweis ein PCB (printed circuit board). Über den Träger kann auch die Stromversorgung der LEDs und deren Ansteuerung erfolgen.

Vorzugsweise ist ein Beleuchtungsmodul, das den Träger mit den LEDs und den Lichteinkoppelelementen umfasst, mittels der Lichteinkoppelelemente an der Lichtleitschicht befestigt. Der Träger erfordert keine eigene Befestigung oder Verklebung an der Lichtleitschicht. Die Befestigung erfolgt vorzugsweise mittels der voranstehend beschriebenen Befestigung der Lichtleitelemente an der Lichtleitschicht, insbesondere mittels Verklebung der Lichtleitelemente an der Lichtleitschicht. Somit ist nur ein Klebevorgang für die Verklebung der Lichteinkoppelelemente erforderlich.

Zweckmäßigerweise enthält jedes Lichteinkoppelelement zumindest ein Befestigungselement, mit dem das Lichteinkoppelelement an dem Träger befestigt werden kann. Das Befestigungselement ist bei einem als Kunststoff-Spritzgussteil hergestellten Lichteinkoppelelement zweckmäßigerweise ein angespritztes Bauteil. Das Befestigungselement kann aber auch ein anderweitiges Teil des Lichteinkoppelelements oder ein daran angebrachtes Teil sein.

Gemäß einer bevorzugten Ausführungsform ist vorgesehen, dass die Lichteinkoppelelemente den Träger im Wesentlichen parallel zur Innenfläche der Lichtleitschicht halten. Die LEDs strahlen von ihnen seitlich ausgestrahltes Licht (sogenannte "side-LEDs") über die LED-Flächen in die Lichteinkoppelelemente ein. Bei dieser Gestaltung können die LEDs nahe an der Lichtleitschicht positioniert werden, da keine Halterung zwischen den LEDs und der Lichtleitschicht erforderlich ist. Eine parallele Anordnung des Trägers ist nicht im Sinn einer streng mathematischen Parallelität zu verstehen. Vielmehr ist als parallele Anordnung des Trägers auch eine Anordnung unter einer gewissen Neigung zur Lichtleitschicht zu verstehen, beispielsweise unter einem Winkel von bis zu 15° oder 20°.

Es ist somit besonders bevorzugt, wenn die LEDs zwischen dem Träger und der Lichtleitschicht und benachbart zur Lichtleitschicht oder unmittelbar an der Lichtleitschicht angeordnet sind. Hierdurch wird die erforderliche Bauraumhöhe reduziert. Weiterhin können die Lichteinkoppelelemente mit geringerer Höhe eingesetzt werden.

Zweckmäßigerweise überdeckt der Träger die Lichteinkoppelelemente unterseitig zumindest teilweise. Damit kann eine einfache und sichere Befestigung der Lichteinkoppelelemente an dem Träger erfolgen. Ungewollte Lichtauskoppelung im Bereich der LED oder der Lichteinkoppelelemente wird auf diese Weise ebenfalls reduziert.

Gemäß einer weiteren alternativen Ausführungsform ist vorgesehen, dass die Lichteinkoppelelemente den Träger im Wesentlichen senkrecht zur Innenfläche der Lichtleitschicht halten und dass die LEDs von ihnen oberseitig ausgestrahltes Licht (sogenannte "top-LEDs") über die LED-Flächen in die Lichteinkoppelelemente einstrahlen. Auch bei dieser Ausführungsform können die LEDs nahe an der Lichtleitschicht oder unmittelbar an der Lichtleitschicht positioniert werden, da keine Halterung zwischen den LEDs und der Lichtleitschicht erforderlich ist. Die LEDs können z. B. an einem der Lichtleitschicht benachbarten Oberrand des Trägers angeordnet sein. Eine senkrechte Anordnung des Trägers zur Lichtleitschicht ist nicht auf eine Anordnung unter einem exakten rechten Winkel beschränkt. Vielmehr ist als senkrechte Anordnung des Trägers auch eine Anordnung unter Abweichung von einem rechten Winkel zu verstehen, beispielsweise unter einem Winkel von bis zu 15° oder 20°.

Zweckmäßigerweise ist eine Abdeckung mit dem Träger verbunden. Die Abdeckung, die das Beleuchtungsmodul abdeckt, stellt auch eine Blende dar, die z. B. von den Lichteinkoppelelementen ausgehendes Streulicht abschirmen kann.

Gemäß einer bevorzugten Ausführungsform ist die Abdeckung an der Lichtleitschicht gehalten oder befestigt. Die Abdeckung hält den Träger mit den daran angeordneten Lichteinkoppelelementen an der Lichtleitschicht korrekt positioniert. Die Abdeckung kann den Träger derart elastisch verbunden halten, dass die Abdeckung in ihrer Stellung an der Lichtleitschicht den Träger elastisch gegen die Lichtleitschicht vorgespannt hält. Hierdurch wird eine optisch korrekte Positionierung der Lichteinkoppelelemente an der Lichtleitschicht unterstützt.

Gemäß einer alternativen Ausführungsform ist die Abdeckung an dem Träger befestigt und vom Träger an der Lichtleitschicht positioniert gehalten. Dabei ist der Träger mittels der Lichteinkoppelelemente an der Lichtleitschicht befestigt. Da die Abdeckung am Träger befestigt ist, ist keine anderweitige Befestigung für die Abdeckung erforderlich.

Vorzugsweise ist die Abdeckung mit einer Längswölbung gebildet, die an eine Wölbung der Lichtleitschicht bzw. der Fahrzeugscheibe angepasst ist und insbesondere mit dieser übereinstimmt. Wenn die Abdeckung ausreichend steif ist, kann sie den die Lichteinkoppelelemente tragenden Träger entsprechend vorwölben, wenn dieser gemeinsam mit der Abdeckung an der Lichtleitschicht befestigt wird.

Zweckmäßigerweise ist eine Abdichtung zwischen der Abdeckung und der Lichtleitschicht vorgesehen. Die Abdichtung ist vorzugsweise zusammen mit der Abdeckung in einem 2-K-Spritzgussverfahren hergestellt. Die Abdichtung kann aber auch eigenständige Dichtelemente umfassen.

Gemäß einer bevorzugten Ausführungsform ist vorgesehen, dass jedes angeordnete (z.B. angeschäumte) oder mit der Lichtleitschicht einstückig gebildete Lichteinkoppelelement eine Halterung aufweist und dass die Halterungen den die LEDs tragenden Träger an den Lichteinkoppelelementen positionieren. Die Halterung ist zweckmäßigerweise am Lichteinkoppelelement an seiner der Basisfläche gegenüberliegenden Oberseite gebildet. Die Halterung ist z. B. als Aufsteckeinheit für einen z. B. von einem PCB gebildeten Träger geformt, der mehrere LEDs aufweist.

Die angeschäumten Lichteinkoppelelemente sind zweckmäßigerweise über Verbindungsstege miteinander verbunden, die beim Schäumen gebildet werden, wenn das Schäummaterial jeweils von einer Kavität des einen Lichteinkoppelelements über ein Verteilerkanalsegment zur nächsten Kavität des benachbarten Lichteinkoppelelements strömt.

Bei dem erfindungsgemäßen Verfahren zum Herstellen einer solchen Fahrzeugscheibe mit einer Beleuchtungseinrichtung ist vorgesehen, dass ein Träger mit daran angebrachten LEDs bereitgestellt wird. Weiterhin werden die Lichteinkoppelelemente jeweils in Zuordnung zu einer der LEDs mit dem Träger fest verbunden. Schließlich wird ein Beleuchtungsmodul, das den Träger mit den LEDs und den Lichteinkoppelelementen umfasst, an der Lichtleitschicht unter optischer Ankoppelung der Lichteinkoppelelemente an die Lichtleitschicht befestigt, indem entweder die Lichteinkoppelelemente an der Lichtleitschicht befestigt werden oder eine Abdeckung, die mit dem Träger verbunden ist und das Beleuchtungsmodul abdeckt, an der Lichtleitschicht befestigt wird und dabei den Träger positioniert und fixiert. Dieses Verfahren vereinfacht die Montage, da nur die Lichtleitelemente an der Lichtleitschicht befestigt oder verklebt werden müssen und der Träger selbst keine zusätzliche eigenständige oder unmittelbare Befestigung an der Lichtleitschicht erfordert. Die Montage der Lichtleitelemente oder Prismen auf dem Träger kann mittels eines Bestückungsroboters erfolgen.

In einer abgewandelten alternativen Verfahrensweise können zunächst die einzelnen Lichtleitelemente oder Prismen mittels eines Bestückungsroboters an der Lichtleitschicht befestigt oder verklebt werden. Anschließend wird der die LEDs enthaltende Träger an die Lichtleitelemente oder Prismen positioniert und mit diesen fest verbunden.

Bei einem weiteren bevorzugten Verfahren zum Herstellen einer solchen Fahrzeugscheibe mit einer Beleuchtungseinrichtung ist vorgesehen, dass die Lichtleitschicht mit einstückig angeformten Lichteinkoppelelementen gebildet wird oder dass die Lichteinkoppelelemente an die Lichtleitschicht angeschäumt werden. Weiterhin ist vorgesehen, dass die Lichteinkoppelelemente mit Halterungen für einen die LEDs tragenden Träger versehen werden. Schließlich wird der Träger an den Halterungen befestigt. Dabei werden die LEDs an den Lichteinkoppelelementen positioniert.

Die erfindungsgemäße Fahrzeugscheibe kann jede Scheibe einer Fahrzeugverglasung sein, beispielsweise ein in einer Dachöffnung fest oder bewegbar angeordneter Deckel, eine Verglasung eines Dachmoduls oder Panoramadachs oder auch eine Seitenscheibe, ein Heckscheibe oder eine Frontscheibe.

Nachfolgend wird die Erfindung anhand von Ausführungsbeispielen einer erfindungsgemäßen Fahrzeugscheibe unter Bezugnahme auf die Zeichnung näher erläutert. Es zeigt:
- Fig. 1: in einer isometrischen Ansicht ein Fahrzeugdach mit einer erfindungsgemäßen Fahrzeugscheibe;
- Fig. 2: in einer Querschnittsansicht ein Randbereich der Fahrzeugscheibe mit einer Beleuchtungseinrichtung mit einer LED und einem zugeordneten Lichteinkoppelelement;
- Fig. 3: in einer Draufsicht die Beleuchtungseinrichtung mit mehreren LEDs und zugeordneten Lichteinkoppelelementen;
- Fig. 4: in einer Seitenansicht die Beleuchtungseinrichtung mit der LED und dem zugeordneten Lichteinkoppelelement der Fig. 2;
- Fig. 5: in einer Querschnittsansicht eine zweite Ausführungsform der Beleuchtungseinrichtung;
- Fig. 6: in einer Draufsicht die Beleuchtungseinrichtung der Fig. 5 mit mehreren LEDs und zugeordneten Lichteinkoppelelementen;
- Fig. 7: in einer Seitenansicht die Beleuchtungseinrichtung der Fig. 5;
- Fig. 8: in einer isometrischen Ansicht eine Ausführungsform eines Lichteinkoppelelements;
- Fig. 9: in einer isometrischen Ansicht mehrere der in Fig. 8 dargestellten Lichteinkoppelelemente in einer Reihenanordnung;
- Fig. 10: in Draufsicht vier Reihen von unterschiedlich gestalteten Lichteinkoppelelementen;
- Fig. 11: in einer Querschnittsansicht die Fahrzeugscheibe mit einem angeschäumten Lichteinkoppelelement;
- Fig. 12: in einer isometrischen Ansicht mehrere an der Fahrzeugscheibe angeschäumte Lichteinkoppelelemente;
- Fig. 13: in einer Draufsicht in schematischer Darstellung eine Fahrzeugscheibe mit mehreren Lichteinkoppelelementen, mit einer Randanschäumung und mit zugehörigen Angusskanälen eines Schäumwerkzeugs;
- Fig. 14: in einer Draufsicht auf die Unterseite einen seitlichen Randabschnitt der Fahrzeugscheibe mit einer Reihe von angeformten Lichteinkoppelelementen; und
- Fig. 15: in einer Draufsicht auf die Unterseite einen seitlichen Randabschnitt eines die Fahrzeugscheibe der Fig. 14 enthaltenden Deckels.

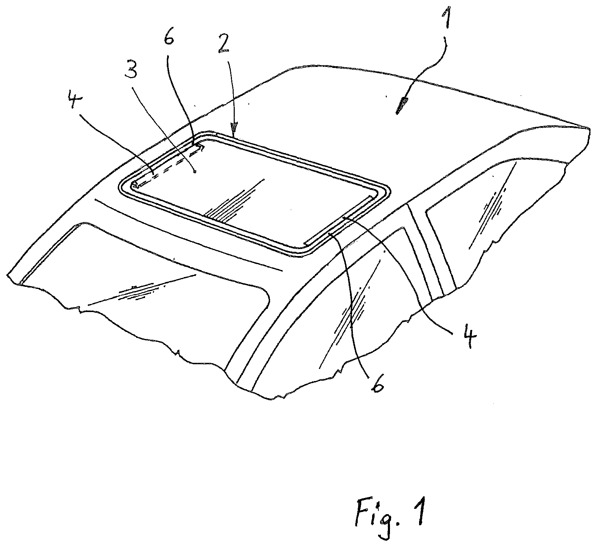

Ein Fahrzeug wie z. B. ein Personenkraftwagen umfasst ein Fahrzeugdach 1 (Fig. 1) mit einer Dachöffnung 2, in der eine Fahrzeugscheibe 3 angeordnet ist, die z. B. in der Dachöffnung 2 fest angeordnet ist oder als ein Deckel gebildet ist, der in der Dachöffnung 2 mittels einer Lagereinrichtung bewegbar gelagert und zwischen einer Schließstellung und Lüftungs- oder Öffnungsstellungen in an sich bekannter Weise verstellbar. Die Fahrzeugscheibe 3 kann auch ein fester Teil oder Abschnitt eines Dachmoduls oder Panoramadaches sein. Die Fahrzeugscheibe 3 weist jeweils eine Beleuchtungseinrichtung 4 auf, die an der Scheibeninnenseite 5 und vorzugsweise entlang eines jeweiligen Seitenrandes 6 der Fahrzeugscheibe 3 angeordnet ist.

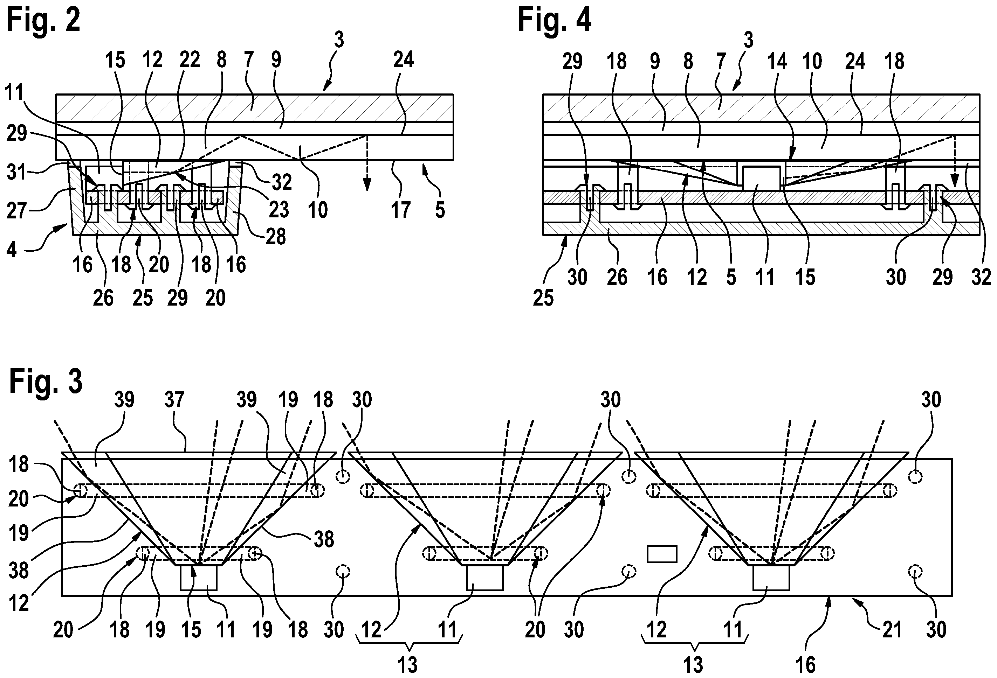

Die Fahrzeugscheibe 3 umfasst (siehe Fig. 2 und 3) eine Außenscheibe 7, eine Innenscheibe 8 und eine Verbindungsschicht 9, die die Außenscheibe 7 und die Innenscheibe 8 miteinander verbindet und z. B. eine Laminatschicht, Laminatfolie oder Schmelzklebefolie enthält. Die Außenscheibe 7 ist z. B. eine getönte Glasscheibe. Die Innenscheibe 8 ist insbesondere eine transparente Glasscheibe oder Klarglasscheibe, die eine Lichtleitschicht 10 bildet.

Die Beleuchtungseinrichtung 4 weist mehrere LEDs 11 und mehrere Lichteinkoppelelemente 12 auf, wobei jeweils eine LED 11 und ein Lichteinkoppelelement 12 eine Beleuchtungseinheit 13 bilden. Mehrere solcher Beleuchtungseinheiten 13 sind nebeneinander in einer Reihe und vorzugsweise voneinander beabstandet angeordnet. Der Abstand zwischen zwei benachbarten LEDs 11 beträgt beispielsweise 30 mm. Die Beleuchtungseinrichtung 4 am Seitenrand 6 der Fahrzeugscheibe 4 umfasst somit beispielsweise etwa 20 bis 30 Beleuchtungseinheiten 13. Die Länge eines einzelnen Lichteinkoppelelements 12 in Längsrichtung der reihenförmigen Anordnung beträgt z. B. etwa 25 bis 28 mm. Diese Längenangabe bezieht sich insbesondere auf den als Keilspitze 37 spitz zulaufenden Vorderrand des keilförmigen oder prismatischen Lichteinkoppelelements 12.

Das Lichteinkoppelelement 12 stellt ein optisches Prisma dar und ist z. B. ein Kunststoff-Spritzgussteil. Das Lichteinkoppelelement 12 weist eine Basisfläche 14 und eine LED-Fläche 15 auf, die vorzugsweise senkrecht zur Basisfläche 14 angeordnet und der LED 11 zugeordnet ist. Die LEDs 11 sind gemäß einer ersten Ausführungsform (Fig. 2 bis 4) auf einem Träger 16 fest angebracht, der z. B. ein PCB (printed circuit board) ist, vorzugsweise als flächiges leistenförmiges Bauteil gestaltet ist und über den die Stromversorgung der LEDs 11 und deren Ansteuerung erfolgt. Der flächige Träger 16 ist in seiner Einbaustellung in etwa parallel zur Scheibeninnenseite 5 und zur Innenfläche 17 der Innenscheibe 8 und beabstandet zu dieser angeordnet. Die LEDs 11 sind bei dieser Ausführungsform das Licht seitlich abstrahlende LEDs, die somit in ihrer Stellung am Träger 16, in der sie sich auf der der Lichtleitschicht 10 zugewandten Seite des Trägers 16 befinden, das Licht parallel zum Träger 16 ausstrahlen.

Das Lichteinkoppelelement 12 weist beim Spritzgießen angeformte Befestigungselemente 18 auf, die z. B. als Zapfen mit Clipsen gebildet sind und die vom Lichteinkoppelelement 12 auf seiner der Basisfläche 14 gegenüber liegenden Oberseite vorragen. Das Lichteinkoppelelement 12 weist z. B. vier dieser Befestigungselemente 18 auf, wobei jeweils zwei der Befestigungselemente 18 an jeder der beiden Seiten des Lichteinkoppelelements 12 über kurze Arme 19 angeformt sind.

Der Träger 16 weist jeweils vier Bohrungen 20 in Zuordnung zu jeder LED 11 und zu den vier Befestigungselementen 18 auf. Das Lichteinkoppelelement 12 wird mittels der Befestigungselemente 18, die in den Bohrungen 20 rastend einsetzbar sind, an dem Träger 16 einwärts neben der LED 11 - einwärts bezüglich des Seitenrandes der Fahrzeugscheibe in Querrichtung oder y-Richtung - angeordnet und befestigt, so dass das Lichteinkoppelelement 12 mit seiner LED-Fläche 15 unmittelbar an die LED 11 angrenzt.

Ein Beleuchtungsmodul 21, das einen Träger 16 mit mehreren jeweils eine LED 11 und ein Lichteinkoppelelement 12 enthaltenden Beleuchtungseinheiten 13 umfasst, wird an der Lichtleitschicht 10 als Einheit angebracht, indem jedes Lichteinkoppelelement 12 über seine Basisfläche 14 an der Innenfläche 17 der Innenscheibe 8 durch eine Verklebung 22 (Fig. 2), z. B. einen transparenten Klebstoff oder ein transparentes Klebeband, befestigt wird. Jedes Lichtleitelement 12 leitet von der LED 11 eingestrahltes Licht über zumindest eine der unterseitigen Basisfläche 14 gegenüberliegende oberseitige Reflexionsfläche 23 in die Lichtleitschicht 10, in der das Licht über weitere innere Reflexion auf eine Lichtauskoppelstruktur 24, z. B. eine Bedruckung der Lichtleitschicht 10, trifft und von dieser zum Fahrzeuginnenraum hin abgestrahlt wird.

Die Anordnung mehrerer einzelner kurzer bzw. schmaler Lichteinkoppelelemente 12 bzw. Prismen hat den Vorteil, dass Spannungen in den jeweiligen Verklebungen der einzelnen Lichteinkoppelelemente 12 bzw. Prismen, die bei Temperaturänderungen und bei unterschiedlichen Wärmeausdehnungen der Glasscheibe, der Lichtleitschicht 10 und der einzelnen Kunststoffprismen als Lichteinkoppelelemente 12 auftreten können, wesentlich reduziert sind im Vergleich mit Spannungen in der Verklebung eines langen Lichteinkoppelelements, über dessen Länge vielen LEDs angeordnet sind, die ihr Licht in dieses eine Lichteinkoppelelement einstrahlen.

Insbesondere bei in Längsrichtung gewölbten Fahrzeugscheiben 3 ist die Anordnung mehrerer einzelner kurzer Lichteinkoppelelemente 12 bzw. Prismen vorteilhaft, da sich diese kurzen Lichteinkoppelelemente 12 bzw. Prismen besser an eine solche Wölbung anpassen können im Vergleich mit einem einzelnen langen Lichteinkoppelelement oder Prisma.

Weiterhin können die LEDs 11 über den Träger 16 sehr nahe an der Lichtleitschicht 10 angeordnet werden, da ein Befestigungselement oder Träger zwischen der LED 11 und der Lichtleitschicht 10 nicht erforderlich ist. Damit kann die nötige Bauhöhe des Lichteinkoppelelements 12 bzw. Prismas senkrecht zur Lichtleitschicht bzw. die Höhe der LED-Fläche 15 reduziert sein.

Weiterhin erhöht die jeweilige gegenseitige Anordnung der LED 11 und des zugehörigen Lichteinkoppelelements 12 bzw. Prismas an dem einen Träger 16 die Positioniergenauigkeit und reduziert möglicherweise auftretende Toleranzen bei einer ansonsten separaten Montage der LED und des zugehörigen Lichteinkoppelelements bzw. Prismas an einem jeweiligen Trägerbauteil.

Bei der Montage des Beleuchtungsmoduls 21 an der Lichtleitschicht 10 ist nur die Verklebung 22 der Lichteinkoppelelemente 12 bzw. Prismen an der Lichtleitschicht 10 erforderlich. Eine ansonsten zusätzliche eigene Befestigung der LEDs an der Lichtleitschicht 10 ist nicht erforderlich.

Die Befestigung der Lichteinkoppelelemente 12 bzw. Prismen an dem Träger 16 kann anstatt mittels der Befestigungselemente 18 auch über eine Verklebung oder über anderweitige Befestigungsmittel erfolgen, z. B. bei Lichteinkoppelelementen 12 aus Glas bzw. bei Glasprismen. Die Befestigung kann auch mittels Vergussmaterial, mittels Klebeband oder mittels einer Halte- oder Klemmeinrichtung erfolgen.

Eine Abdeckung 25 für das Beleuchtungsmodul 21 ist z. B. trogförmig gebildet und weist eine Bodenwand 26 und zwei Seitenwände 27 und 28 auf. An der Bodenwand 26 sind innenseitig nach oben gerichtete Befestigungselemente 29 angeordnet oder angeformt, die zum Eingriff in zugeordnete Öffnungen 30 in dem Träger 16 vorgesehen sind. Zum Befestigen der Abdeckung 25 greifen die Befestigungselemente 29, die z. B. Clipse aufweisen, in die Öffnungen 30 ein und halten die Abdeckung 25 am Träger 16 mittels Klemmung oder Rastung insbesondere formschlüssig befestigt. Anstatt mit Befestigungselementen 29 kann die Abdeckung 25 auch durch randseitiges Umgreifen des Trägers 16 in Klemm- oder Rasteingriff befestigt werden. Die beiden Seitenwände 27 und 28 weisen an ihren beiden freien Rändern Dichtungen 31 und 32 auf, die an der Lichtleitschicht 10 dicht anliegen. Die Abdeckung 25 ist insbesondere ein Kunststoff-Spritzgussteil, bei dem in einem 2K-Spritzgussvorgang die Dichtungen 31, 32 angeformt werden.

Die Abdeckung 25 kann zweckmäßigerweise in ihrer Längserstreckung mit einer Wölbung geformt sein, die der Wölbung der zugehörigen Fahrzeugscheibe entspricht.

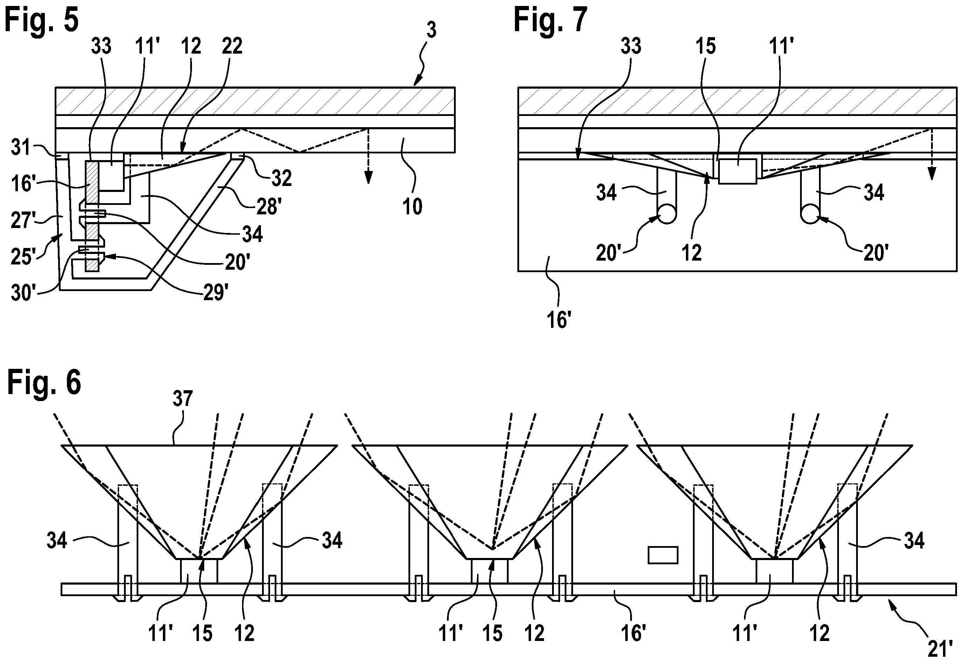

Gemäß einer abgewandelten Ausführungsform (siehe Fig. 5 bis 7) ist der Träger 16', zweckmäßigerweise gleichfalls ein PCB, in seiner Einbaustellung aufrecht stehend und im Wesentlichen vertikal zur Lichtleitschicht 10 angeordnet. Die LEDs 11' sind am Träger 16' im Bereich seines der Lichtleitschicht 10 benachbarten Oberrandes 33 auf seiner deckeleinwärts gerichteten Seite angebracht. Die LEDs 11' sind bei dieser Ausführungsform das Licht von ihrer Oberseite abstrahlende LEDs, die somit in ihrer Stellung am Träger 16' das Licht senkrecht zum Träger 16' und parallel zur Lichtleitschicht 10 ausstrahlen.

Jedes Lichteinkoppelelement 12 ist z. B. über zwei z. B. abgewinkelte Befestigungsarme 34 derart an dem Träger 16' befestigt, dass seine LED-Fläche 15 zur Lichteinstrahlung von der LED 11' unmittelbar an die LED 11' angrenzt. Auch bei dieser Ausführungsform können die Befestigungsarme 34 über Clipsverbindungen in Öffnungen oder Bohrungen 20' des Trägers 16' eingreifen.

Bei der Montage wird das Beleuchtungsmodul 21' mittels gleichzeitig vorzunehmenden Verklebungen 22 der einzelnen Lichteinkoppelelemente 12 an der Lichtleitschicht 10 befestigt.

Die Befestigung der Abdeckung 25' erfolgt über Befestigungselemente 29', die zum Beispiel Clipse aufweisen, in Öffnungen 30' in dem Träger 16' eingreifen und die Abdeckung 25' am Träger 16' mittels Klemmung oder Rastung insbesondere formschlüssig befestigt halten. Die Befestigungselemente 29' sind z. B. an der äußeren Seitenwand 27' der Abdeckung 25' und nach innen weisend angeordnet oder angeformt. Die Abdeckung 25' weist entsprechend der vorherigen Ausführungsform Dichtungen 31, 32 an den Rändern der Seitenwände 27' und 28' auf.

Die Vorteile dieser in den Fig. 5 bis 7 dargestellten Ausführungsform stimmen im Wesentlichen mit denjenigen der in den Fig. 2 bis 4 dargestellten ersten Ausführungsform überein.

Bei beiden Ausführungsformen kann aufgrund der Anordnung der LEDs 11, 11' in der Nähe der Lichtleitschicht 10 oder unmittelbar angrenzend an die Lichtleitschicht 10 die Höhe des Lichteinkoppelelements 12 bzw. Prismas im Bereich der an die LED angrenzenden LED-Fläche 15 und damit auch die Breite bzw. Länge des Lichteinkoppelelements 12 bzw. Prismas reduziert werden. Somit kann die Anzahl einzelner Lichteinkoppelelemente 12 über die Länge der Beleuchtungseinrichtung 4 erhöht werden, wodurch die Qualität der Beleuchtung verbessert werden kann.

Die nachfolgende Beschreibung der Lichteinkoppelelemente 12 betrifft solche Lichteinkoppelelemente, die als eigenständige Bauteile an der Lichtleitschicht 10 z. B. durch Ankleben befestigt werden, oder die als Schäum- oder Spritzgusselemente an die Lichtleitschicht 10 angeschäumt, angespritzt oder angeklebt werden oder die auch einstückig mit der Lichtleitschicht 10 gebildet sind, wobei in diesem Fall die Basisfläche 14 des Lichteinkoppelelements 12 eine fiktive Fläche parallel zur Oberfläche der Lichtleitschicht 10 oder zur Scheibeninnenseite 5 ist.

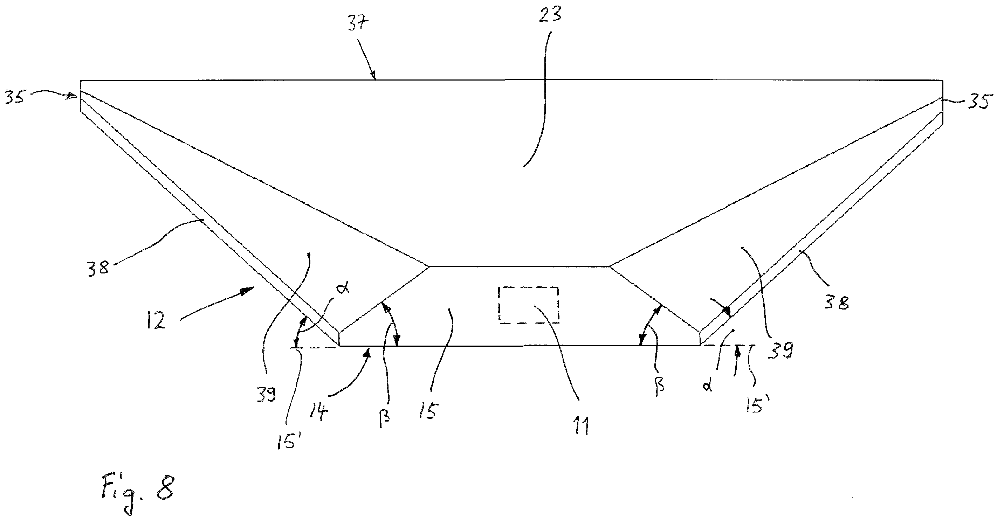

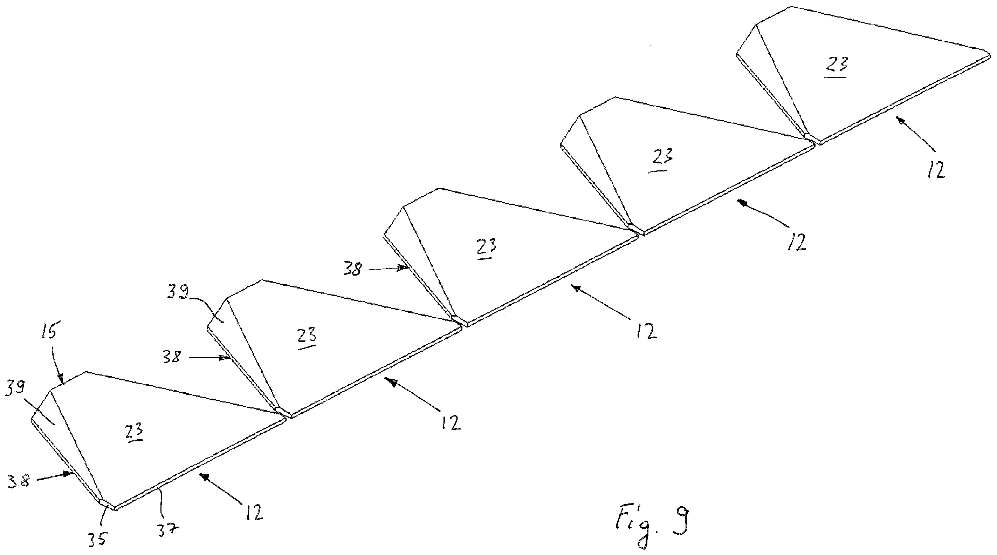

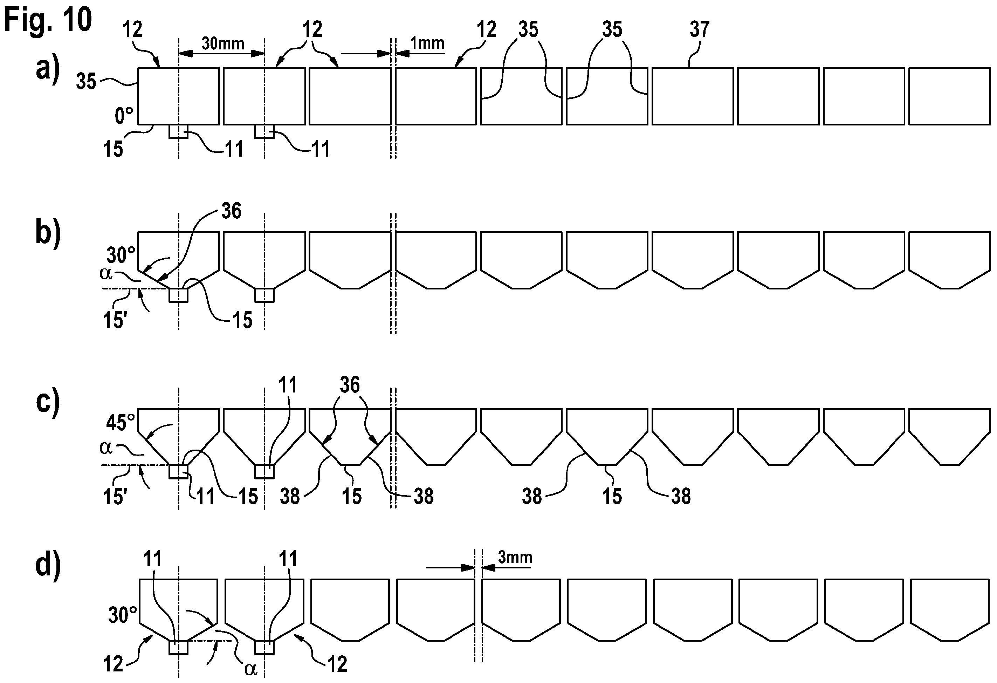

Jedes Lichteinkoppelelement 12 (siehe Fig. 8 bis 10) ist in Seitenansicht (siehe Fig. 2) vorzugsweise keilförmig mit einer zur LED-Fläche 15 gegenüber liegenden Keilspitze 37 gebildet. Die LED-Fläche 15 ist an der Einstrahlseite des Lichteinkoppelelements 12 insbesondere rechtwinklig zur Basisfläche 14 angeordnet. Das Lichteinkoppelelement 12 weist an seinen beidseitigen Flanken jeweils einen Seitenrand 35 auf. Die beiden sich gegenüber liegenden Seitenränder 35 sind z. B. zueinander parallel (Fig. 10a), so dass das Lichteinkoppelelement 12 somit eine rechteckige Basisfläche 14 aufweist. Die Seitenränder 35 sind in den beiden keilförmigen und zueinander parallelen Parallelseitenflächen enthalten. Diese Parallelseitenflächen bilden gleichfalls Reflexionsflächen für von der LED 11 in das Lichteinkoppelelement 12 eingestrahltes Licht. Die LED-Fläche 15 erstreckt sich in ihrer Breite zwischen den beiden Seitenrändern 35 über die gesamte Breite des Lichteinkoppelelements 12 bzw. über dessen Länge in Richtung der Reihenanordnung. Die einzelnen Lichteinkoppelelemente 12 mit den parallelen Seitenrändern 35 sind in der Reihenanordnung der Fig. 10a, in der sie mit dem Träger 16 verbunden sind bzw. an der Lichtleitschicht 10 angeordnet oder angeklebt sind, in einem jeweiligen Abstand zwischen ihren Seitenrändern 35 von beispielsweise zumindest 1 mm oder 3 mm (Fig. 10d) angeordnet.

Das Lichtleitelement 12 kann mit einer in seiner Breitenrichtung reduzierten LED-Fläche 15 gebildet sein (Fig. 8, 9 und 10b bis 10d). Das derart gestaltete Lichtleitelement 12 ist ausgehend von dieser schmalen LED-Fläche 15 zu jedem Seitenrand 35 hin unter einem Winkel α gegenüber der LED-Fläche 15 abgeschrägt. Hierdurch ist beidseits der LED-Fläche 15 jeweils eine insbesondere ebenflächige Schrägreflexionsfläche 36 gebildet. Die Schrägreflexionsfläche 36 erstreckt sich bis zu dem dementsprechend verkürzten Seitenrand 35 bzw. bis zu der verkürzten keilförmigen Parallelseitenfläche. Jede Schrägreflexionsfläche 36 bildet im Übergang zur Basisfläche 14 einen Schrägseitenrand 38. Der Winkel α ist der Außenwinkel zwischen der Schrägreflexionsfläche 36 bzw. dem Schrägseitenrand 38 und einer gedachten Verlängerung 15' der Ebene der LED-Fläche 15. Der Winkel α beträgt beispielsweise 30° (Fig. 10b und 10d) oder 45° (Fig. 10c).

Weiterhin kann jedes Lichtleitelement 12 an seinen beiden seitlichen Flanken im Bereich der Schrägseitenränder 38 jeweils eine geneigte Seitenreflexionsfläche 39 aufweisen. Die Seitenreflexionsfläche 39 erstreckt sich ausgehend von dem Schrägseitenrand 38 unter einem spitzen Winkel β, gemessen in der Ebene der LED-Fläche 15 (siehe Fig. 8), zur Reflexionsfläche 23 hin. Der Winkel β liegt in einem Bereich von beispielsweise 35° bis 70°. Die Seitenreflexionsfläche 39 weist somit in etwa eine Dreieckform auf. Von der LED 11 in das Lichtleitelement 12 eingestrahltes Licht wird über die Reflexionsfläche 23 als Hauptreflexionsfläche und über die beiden Schrägreflexionsfläche 36 bzw. über die beiden zusätzlichen Seitenreflexionsflächen 39 reflektiert und in die Lichtleitschicht 10 eingekoppelt. Die Lichtreflexion im Lichteinkoppelelement 12 und damit die Qualität der Beleuchtung kann über die Festlegung des Winkels α der Abschrägungen bzw. der Schrägreflexionsflächen 36 sowie des Winkels β der Neigung der Seitenreflexionsflächen 39 eingestellt werden.

Durch die beiden Beleuchtungseinrichtungen 4, die bezüglich einer vertikalen Dachlängsmittelebene im Bereich des jeweiligen Seitenrandes der Fahrzeugscheibe 3 symmetrisch angeordnet sind, kann eine Ambient-Light-Beleuchtung bereitgestellt werden.

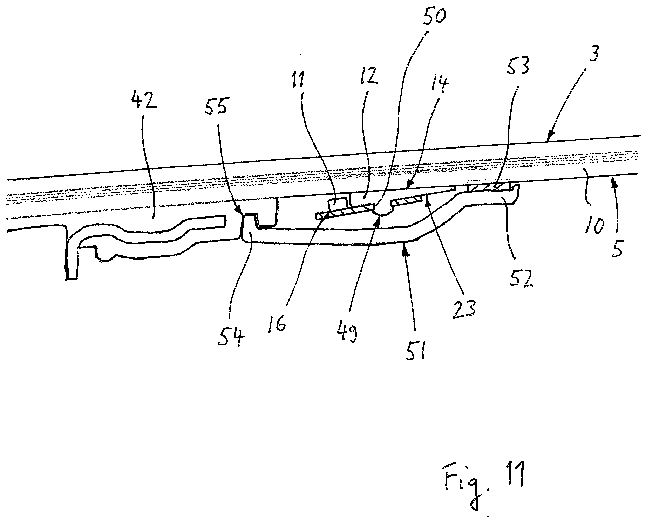

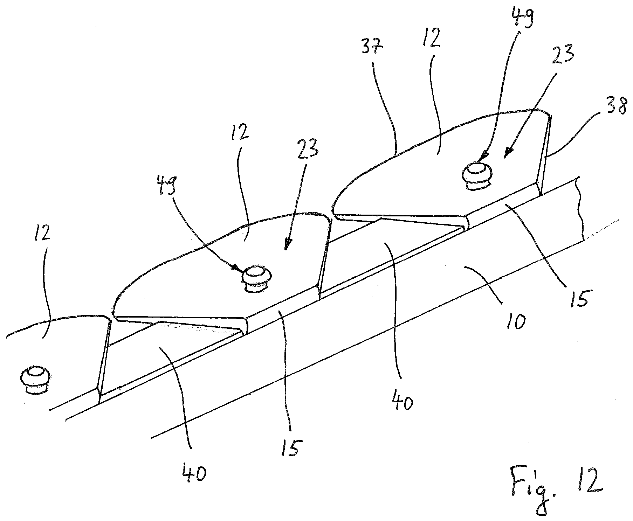

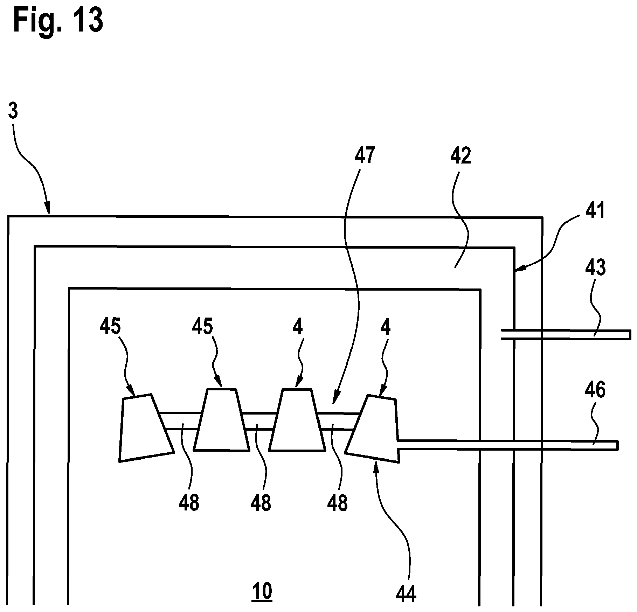

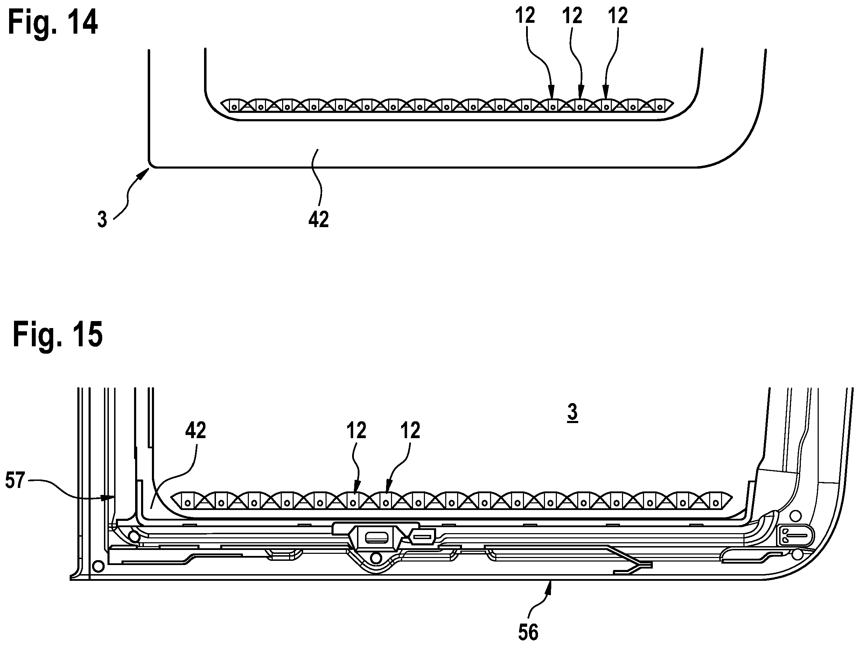

Bei einer abgewandelten Ausführungsform der Fahrzeugscheibe 3 (siehe die Fig. 11 bis 15) sind die Lichteinkoppelelemente 12 an der Scheibeninnenseite 5 an die Lichtleitschicht 10 angeschäumt. Die Lichteinkoppelelemente 12 sind nebeneinander in einer Reihe angeordnet (siehe Fig. 14) und vorzugsweise über Verbindungsstege 40 (Fig. 12) miteinander verbunden. Jeweils zwei benachbarte Lichteinkoppelelemente 12 sind über einen solchen Verbindungssteg 40 miteinander verbunden. Eine Fahrzeugscheibe 3 ist zum Anschäumen der Lichteinkoppelelemente 12 in einem Schäumwerkzeug angeordnet, das eine Kavität 41 (Fig. 13) für eine Randanschäumung 42 der Fahrzeugscheibe 3 aufweist. Die Kavität 41 ist über einen im Werkzeug vorgesehenen Angusskanal 43 mit Schäummaterial, z. B. schwarzes Standard-Polyurethan, zu befüllen.

Eine weitere Kavität 44 des Schäumwerkzeugs enthält für jedes Lichteinkoppelelement 12 ein Formnest 45. Ein Angusskanal 46 führt im Werkzeug zu einem ersten Formnest 45. Ein Verteilerkanal 47 verbindet die weiteren Formnester 45 untereinander, wobei jeweils zwei benachbarte Formnester 45 über ein jeweiliges Kanalsegment 48 des Verteilerkanals 47 miteinander verbunden sind. Das eingespritzte Schäummaterial bildet in jedem Formnest 45 ein an die Lichtleitschicht 10 angeschäumtes Lichteinkoppelelement 12 und in den Kanalsegmenten 48 einen jeweiligen Verbindungssteg 40. Die Kanalsegmente 48 weisen eine solche Gestalt auf, dass jeder Verbindungssteg 40 vorzugsweise in Form eines flachen Streifens gebildet ist (Fig. 12), der auf der innenseitigen Oberfläche der Lichtleitschicht 10 angeschäumt ist.

Zweckmäßigerweise sind die Lichteinkoppelelemente 12 (Fig. 11) grundsätzlich mit einer solchen Gestalt gebildet, wie sie voranstehend beschrieben ist (siehe insbesondere die Fig. 8 bis 10). Jedes Lichteinkoppelelement 12 enthält weiterhin eine Halterung 49, die an seiner der Basisfläche 14 gegenüberliegenden Oberseite oder oberseitigen Reflexionsfläche 23 gebildet ist. Die Halterung 49 ist z. B. als Aufsteckeinheit für einen Träger 16, beispielsweise ein PCB, gebildet, der mehrere LEDs 11 enthält. Die LEDs 11 sind nebeneinander und in Reihe sowie in Zuordnung zu den LED-Flächen 15 der Lichteinkoppelelemente 12 an dem Träger 16 angeordnet, so dass beim Aufstecken des Trägers 16 auf die Halterungen 49 der Lichteinkoppelelemente 12 die korrekte Zuordnung der LEDs 11 zu den LED-Flächen 15 hergestellt wird. Die Halterung 49 ist z. B. als zapfenförmige oder pilzförmige Erhebung gebildet, die in eine Öffnung 50 des Trägers 16 eingreift und den Träger 16 zweckmäßigerweise mit einem lösbaren Rasteingriff fixiert, so dass z. B. defekte LEDs 11 zusammen mit dem Träger 16 ausgetauscht werden können.

Ein Fahrzeugdach weist häufig eine nach oben erhabene Wölbung auf. Eine Fahrzeugscheibe 3 des Fahrzeugdachs, die eine entsprechende Wölbung aufweist, ist in Längsrichtung (x-Richtung) entlang der Reihe der Lichteinkoppelelemente 12 gekrümmt. Der längliche streifenförmige Träger 16, der eine Vielzahl von LEDs 11 enthält, wird über die Halterungen 49 an den Lichteinkoppelelementen 12 befestigt. Der Träger 16 passt sich an die Krümmung der Fahrzeugscheibe 3 entlang der Reihe der Lichteinkoppelelemente 12 mit einer in etwa bogenförmigen Verformung an. Diese bogenförmige Verformung bewirkt, dass zumindest einige LEDs 11 ihre zueinander parallele Ausrichtung aufgeben und unter geringem gegenseitigen Winkelversatz ausgerichtet werden. Dementsprechend sind zumindest einige zugeordnete Lichteinkoppelelemente 12 gegeneinander verschwenkt angeordnet. Fig. 13 zeigt schematisch und beispielhaft eine verschwenkte Anordnung der beiden äußeren Lichteinkoppelelemente 12 anhand der zugehörigen Formnester 45.

Eine längliche Abdeckung 51 (Fig. 11) der Lichteinkoppelelemente 12 ist einerseits an ihrem Innenrand 52 scheibeneinwärts vor der Keilspitze 38 der Lichteinkoppelelemente 12 z. B. mittels einer Verklebung 53 befestigt und andererseits an ihrem Außenrand 54 in einer Nut 55 der Randanschäumung 42 z. B. mittels Klemmeingriff gehalten.

Fig. 14 zeigt die Fahrzeugscheibe 3 mit einer Reihe von Lichteinkoppelelementen 12, die an der Scheibeninnenseite in Längsrichtung oder x-Richtung einwärts der Randanschäumung 42, die z. B. von einem schwarz eingefärbten Polyurethan gebildet ist, angeschäumt sind. Fig. 15 zeigt die Unterseite eines Deckels 56 eines Fahrzeugdaches mit einem Deckelrahmen 57, der mit der Fahrzeugscheibe 3 verbunden ist.

Die Lichteinkoppelelemente 12 sind vorzugsweise aus einem transparenten Polyurethan gebildet. Das Schäummaterial der Lichteinkoppelelemente 12 und das Material der Lichtleitschicht 10 weisen zweckmäßigerweise gleiche oder ähnliche optische Eigenschaften auf. Vorzugsweise eignen sich Schäummaterialien auf PU-Basis, die eine hohe Transparenz, eine geringe Vergilbung durch Alterung und einen an die Lichtleitschicht 10 angepassten Brechungsindex aufweisen. Beispielsweise ist ein Brechungsindex von etwa 1,5 für thermoplastisches Polyurethan (TPU) dem Brechungsindex von für die Lichtleitschicht 10 verwendetem Glas sehr ähnlich.

### Bezugszeichenliste

| | | | |
|---|---|---|---|
| 1 | Fahrzeugdach | 31 | Dichtung |
| 2 | Dachöffnung | 32 | Dichtung |
| 3 | Fahrzeugscheibe | 33 | Oberrand |
| 4 | Beleuchtungseinrichtung | 34 | Befestigungsarm |
| 5 | Scheibeninnenseite | 35 | Seitenrand |
| 6 | Seitenrand | 36 | Schrägreflexionsfläche |
| 7 | Außenscheibe | 37 | Keilspitze |
| 8 | Innenscheibe | 38 | Schrägseitenrand |
| 9 | Verbindungsschicht | 39 | Seitenreflexionsfläche |
| 10 | Lichtleitschicht | 40 | Verbindungssteg |
| 11 | LED | 41 | Kavität |
| 12 | Lichteinkoppelelement | 42 | Randanschäumung |
| 13 | Beleuchtungseinheit | 43 | Angusskanal |
| 14 | Basisfläche | 44 | Kavität |
| 15 | LED-Fläche | 45 | Formnest |
| 16 | Träger | 46 | Angusskanal |
| 17 | Innenfläche | 47 | Verteilerkanal |
| 18 | Befestigungselement | 48 | Kanalsegment |
| 19 | Arm | 49 | Halterung |
| 20 | Bohrung | 50 | Öffnung |
| 21 | Beleuchtungsmodul | 51 | Abdeckung |
| 22 | Verklebung | 52 | Innenrand |
| 23 | Reflexionsfläche | 53 | Verklebung |
| 24 | Lichtauskoppelstruktur | 54 | Außenrand |
| 25 | Abdeckung | 55 | Nut |
| 26 | Bodenwand | 56 | Deckel |
| 27 | Seitenwand | 57 | Deckelrahmen |
| 28 | Seitenwand | | |
| 29 | Befestigungselement | | |
| 30 | Öffnung | | |

## Patentansprüche

1. Fahrzeugscheibe (3) mit einer scheibeninnenseitigen Lichtleitschicht (10) und mit einer Beleuchtungseinrichtung (4), die Licht mittels einer Lichteinkoppeleinrichtung in die Lichtleitschicht (10) einleitet, wobei die Beleuchtungseinrichtung (4) mehrere LEDs (11) aufweist und dass jeder LED (11) ein jeweiliges Lichteinkoppelelement (12) zugeordnet ist, über das Licht von der jeweiligen LED (11) in die Lichtleitschicht (10) eingeleitet wird,
wobei jedes Lichteinkoppelelement (12) eine Basisfläche (14) aufweist und über seine Basisfläche (14) an einer zu einem Fahrzeuginnenraum hin gerichteten Innenfläche (17) der Lichtleitschicht (10) optisch angeschlossen ist, und jedes Lichteinkoppelelement (12) eine zu einem benachbarten Scheibenrand (6) gerichtete LED-Fläche (15) aufweist und die jeweilige LED (11) an der LED-Fläche (15) positioniert ist,
**daduchgekennzeichnet, dass**
jedes Lichteinkoppelelement (12) an den Rändern der Basisfläche (14) sich gegenüber liegende Schrägseitenränder (38) aufweist, die sich zur LED-Fläche (15) hin gegeneinander annähern.

2. Fahrzeugscheibe (3) nach Anspruch 1,
**dadurch gekennzeichnet, dass** die Lichteinkoppelelemente (12)
- an der Lichtleitschicht (10) als eigenständige Bauteile befestigt sind, oder
- an der Lichtleitschicht (10) angeschäumt und/ oder angespritzt sind oder
- mit der Lichtleitschicht (10) einstückig gebildet sind.

3. Fahrzeugscheibe (3) nach einem der Ansprüche 1 bis 2, **dadurch gekennzeichnet, dass** jedes Lichteinkoppelelement (12) an jedem Schrägseitenrand (38) aufweist
- eine vom Schrägseitenrand (38) ausgehende Schrägreflexionsfläche (36), die senkrecht zur Basisfläche (14) angeordnet ist, oder
- eine vom Schrägseitenrand (38) ausgehende geneigte Seitenreflexionsfläche (39), die unter einem spitzen Winkel (β) zur Basisfläche (14) angeordnet ist.

4. Fahrzeugscheibe (3) nach einem der Ansprüche 1 bis **dadurch gekennzeichnet, dass** die LEDs (11) an einem Träger (16) befestigt sind und die Lichteinkoppelelemente (12) am Träger (16) in Zuordnung zur jeweiligen LED (11) positioniert und befestigt sind.

5. Fahrzeugscheibe (3) nach Anspruch 4, **dadurch gekennzeichnet, dass** ein Beleuchtungsmodul (21), das den Träger (16) mit den LEDs (11) und den Lichteinkoppelelementen (12) umfasst, mittels der Lichteinkoppelelemente (12) an der Lichtleitschicht (10) befestigt ist.

6. Fahrzeugscheibe (3) nach Anspruch 4 oder 5, **dadurch gekennzeichnet, dass** jedes Lichteinkoppelelement (12) zumindest ein Befestigungselement (18) zur Anbringung an dem Träger (16) aufweist.

7. Fahrzeugscheibe (3) nach einem der Ansprüche 4 bis 6, **dadurch gekennzeichnet, dass** die Lichteinkoppelelemente (12) den Träger (16) im Wesentlichen parallel zur Innenfläche (17) der Lichtleitschicht (10) halten und dass die LEDs (11) von ihnen seitlich ausgestrahltes Licht über die LED-Flächen (15) in die Lichteinkoppelelemente (12) einstrahlen.

8. Fahrzeugscheibe (3) nach einem der Ansprüche 4 bis **dadurch gekennzeichnet, dass** die LEDs (11) zwischen dem Träger (16) und der Lichtleitschicht (10) und benachbart zur Lichtleitschicht (10) oder unmittelbar an der Lichtleitschicht (10) angeordnet sind.

9. Fahrzeugscheibe (3) nach einem der Ansprüche 4 bis **dadurch gekennzeichnet, dass** die Lichteinkoppelelemente (12) den Träger (16') im Wesentlichen senkrecht zur Innenfläche (17) der Lichtleitschicht (10) halten und dass die LEDs (11') von ihnen oberseitig ausgestrahltes Licht über die LED-Flächen (15) in die Lichteinkoppelelemente (12) einstrahlen.

10. Fahrzeugscheibe (3) nach einem der Ansprüche 4 bis **dadurch gekennzeichnet, dass** eine Abdeckung (25, 25') mit dem Träger (16, 16') verbunden ist.

11. Fahrzeugscheibe (3) nach Anspruch 10,
**dadurch gekennzeichnet, dass** die Abdeckung (25, 25') an der Lichtleitschicht (10) gehalten oder befestigt ist und den Träger (16, 16') mit den Lichteinkoppelelementen (12) an der Lichtleitschicht (10) positioniert hält oder
dass die Abdeckung (25, 25') an dem Träger (16, 16') befestigt ist und vom Träger (16, 16') an der Lichtleitschicht (10) positioniert gehalten ist, wobei der Träger (16, 16') mittels der Lichteinkoppelelemente (12) an der Lichtleitschicht (10) befestigt ist.

12. Fahrzeugscheibe (3) nach einem der Ansprüche 2 bis **dadurch gekennzeichnet, dass** jedes angeschäumte, angespritzte, angeklebte oder mit der Lichtleitschicht (10) einstückig gebildete Lichteinkoppelelement (12) eine Halterung (49) aufweist und die Halterungen (49) den die LEDs (11) tragenden Träger (16) an den Lichteinkoppelelementen (12) positionieren.

13. Verfahren zum Herstellen einer Fahrzeugscheibe (3) mit einer Beleuchtungseinrichtung (4) nach einem der Ansprüche 1 bis 3,
**dadurch gekennzeichnet,**
**dass** ein Träger (16, 16') mit daran angebrachten LEDs (11) bereitgestellt wird,
**dass** die Lichteinkoppelelemente (12) jeweils in Zuordnung zu einer der LEDs (11) mit dem Träger (16, 16') fest verbunden werden und
**dass** ein Beleuchtungsmodul (21), das den Träger (16, 16') mit den LEDs (11) und den Lichteinkoppelelementen (12) umfasst, an der Lichtleitschicht (10) unter optischer Ankoppelung der Lichteinkoppelelemente (12) an die Lichtleitschicht (10) befestigt wird, indem
- die Lichteinkoppelelemente (12) an der Lichtleitschicht (10) befestigt werden oder
- eine Abdeckung (25, 25'), die mit dem Träger (16, 16') verbunden ist und das Beleuchtungsmodul (21) abdeckt, an der Lichtleitschicht (10) befestigt wird und dabei den Träger (16, 16') positioniert und fixiert.

14. Verfahren zum Herstellen einer Fahrzeugscheibe (3) mit einer Beleuchtungseinrichtung (4) nach einem der Ansprüche 1 bis 5 und 12,
**dadurch gekennzeichnet,**
**dass** die Lichtleitschicht (10) mit einstückig angeformten Lichteinkoppelelementen (12) gebildet wird oder
**dass** die Lichteinkoppelelemente (12) an die Lichtleitschicht (10) angeschäumt werden,
**dass** die Lichteinkoppelelemente (12) mit Halterungen (49) für einen die LEDs (11) tragenden Träger (16) versehen werden, und
**dass** der Träger (16) an den Halterungen (49) befestigt wird, wobei die LEDs (11) an den Lichteinkoppelelementen (12) positioniert werden.

## Claims

1. Vehicle glazing (3) comprising a light-guiding layer (10) on an inner side of the glazing and an illumination device (4) coupling light into the light-guiding layer (10) via a light-coupling device, wherein the illumination device (4) comprises a plurality of LEDs (11) and wherein each LED (11) is associated to a respective light-coupling element (12) via which light from the respective LED (11) is coupled into the light-guiding layer (10),
wherein each light-coupling element (12) comprises a base surface (14) and is optically connected via its base surface (14) to an inner surface (17) of the light-guiding layer (10) facing a vehicle interior, and each light-coupling element (12) has an LED surface (15) facing an adjacent glazing edge (6), and the respective LED (11) is positioned on the LED surface (15), **characterized in that**
each light-coupling element (12) comprises opposing inclined side edges (38) at the edges of the base surface (14), which converge toward the LED surface (15).

2. Vehicle glazing (3) according to claim 1,
**characterized in that** the light-coupling elements (12)
- are attached to the light-guiding layer (10) as separate components, or
- are bonded to the light-guiding layer (10) by foaming and/or injection molding, or
- are formed integrally with the light-guiding layer (10).

3. Vehicle glazing (3) according to claim 1 or 2,
**characterized in that** each light-coupling element (12) at each inclined side edge (38) comprises
- an inclined reflection surface (36) extending from the inclined side edge (38) and arranged perpendicular to the base surface (14), or
- an inclined side reflection surface (39) extending from the inclined side edge (38) and arranged at an acute angle (β) to the base surface (14).

4. Vehicle glazing (3) according to claim 1 or 2,
**characterized in that** the LEDs (11) are mounted on a carrier (16) and the light-coupling elements (12) are positioned and mounted on the carrier (16) in association with the respective LED (11).

5. Vehicle glazing (3) according to claim 4,
**characterized in that** a lighting module (21), comprising the carrier (16) with the LEDs (11) and the light-coupling elements (12), is attached to the light-guiding layer (10) by means of the light-coupling elements (12).

6. Vehicle glazing (3) according to claim 4 or 5,
**characterized in that** each light-coupling element (12) comprises at least one fastening element (18) for attachment to the carrier (16).

7. Vehicle glazing (3) according to any one of claims 4 to 6,
**characterized in that** the light-coupling elements (12) hold the carrier (16) substantially parallel to the inner surface (17) of the light-guiding layer (10),
and **in that** the LEDs (11) emit light laterally from them via the LED surfaces (15) into the light-coupling elements (12).

8. Vehicle glazing (3) according to any one of claims 4 through 7,
**characterized in that** the LEDs (11) are arranged between the substrate (16) and the light-guiding layer (10) and adjacent to the light-guiding layer (10) or directly on the light-guiding layer (10).

9. Vehicle glazing (3) according to any one of claims 4 to 6,
**characterized in that** the light-coupling elements (12) hold the carrier (16') substantially perpendicular to the inner surface (17) of the light-guiding layer (10), and **in that** the LEDs (11') emit light from their upper side into the light-coupling elements (12) via the LED surfaces (15).

10. Vehicle glazing (3) according to any one of claims 4 to 9,
**characterized in that** a cover (25, 25') is connected to the carrier (16, 16').

11. Vehicle glazing (3) according to claim 10,
**characterized in that** the cover (25, 25') is held or fastened to the light-guiding layer (10) and holds the carrier (16, 16') with the light-coupling elements (12) in position on the light-guiding layer (10), or
that the cover (25, 25') is attached to the carrier (16, 16') and is held in position by the carrier (16, 16') on the light-guiding layer (10), wherein the carrier (16, 16') is attached to the light-guiding layer (10) by means of the light-coupling elements (12).

12. Vehicle glazing (3) according to any one of claims 2 to 5,
**characterized in that** each foam-bonded, injection-molded, adhesive-bonded, or integrally with the light-guiding layer (10) formed light-coupling element (12) comprises a mounting bracket (49), and the mounting brackets (49) position the carrier (16) (11) to the light coupling elements (12).

13. Method for manufacturing a vehicle glazing (3) with a illumination device (4) according to any one of claims 1 to 3,
**characterized in that**
a carrier (16, 16') with LEDs (11) attached thereto is provided,
that the light-coupling elements (12) are each firmly connected to the carrier (16, 16') in association with one of the LEDs (11), and
that a lighting module (21), which comprises the carrier (16, 16') comprising the LEDs (11) and the light-coupling elements (12) is attached to the light-guiding layer (10) with optical coupling of the light-coupling elements (12) to the light-guiding layer (10) by
- attaching the light-coupling elements (12) to the light-guiding layer (10),
or
- mounting a cover (25, 25'), which is connected to the carrier (16, 16') and covers the lighting module (21), to the light-guiding layer (10), thereby positioning and securing the carrier (16, 16').

14. Method for manufacturing a vehicle glazing (3) with a illumination device (4) according to any one of claims 1 to 5 and 12,
**characterized in**
**that** the light-guiding layer (10) is formed with integrally molded light-coupling elements (12) or
**that** the light-coupling elements (12) are foam-bonded to the light-guiding layer (10),
**that** the light-coupling elements (12) are provided with mounting brackets (49) for a carrier (16) carrying the LEDs (11), and
**that** the carrier (16) is secured to the mounting brackets (49), wherein the LEDs (11) are positioned on the light-coupling elements (12).

## Revendications

1. Vitre (3) de véhicule avec une couche de guidage de lumière (10) du côté intérieur de vitre et avec un dispositif d'éclairage (4), qui introduit de la lumière dans la couche de guidage de lumière (10) au moyen d'un dispositif d'injection de lumière, le dispositif d'éclairage (4) comportant plusieurs DEL (11) et un élément d'injection de lumière (12) respectif étant associé à chaque DEL (11), par lequel de la lumière provenant de la DEL (11) respective est introduite dans la couche de guidage de lumière (10), chaque élément d'injection de lumière (12) comportant une surface de base (14) et étant raccordé optiquement par sa surface de base (14) à une surface intérieure (17) de la couche de guidage de lumière (10) dirigée vers l'habitacle du véhicule, et chaque élément d'injection de lumière (12) comportant une surface de DEL (15) dirigée vers un bord (6) de vitre adjacent et la DEL respective (11) étant positionnée sur la surface de DEL (15),
**caractérisée en ce que**
chaque élément d'injection de lumière (12) comporte, sur les bords de la surface de base (14), des bords latéraux obliques (38) se faisant face, qui se rapprochent les uns des autres en direction de la surface de DEL (15).

2. Vitre (3) de véhicule selon la revendication 1, **caractérisée en ce que** les éléments d'injection de lumière (12)
- sont fixés sur la couche de guidage de lumière (10) en tant que composants indépendants, ou
- sont appliqués par moussage et/ou par moulage par injection sur la couche de guidage de lumière (10) ou
- sont formés d'un seul tenant avec la couche de guidage de lumière (10).

3. Vitre (3) de véhicule selon l'une des revendications 1 à 2,
**caractérisée en ce que** chaque élément d'injection de lumière (12) comporte sur chaque bord latéral oblique (38)
- une surface de réflexion oblique (36) partant du bord latéral oblique (38), qui est disposée perpendiculairement à la surface de base (14), ou
- une surface de réflexion latérale inclinée (39) partant du bord latéral oblique (38), qui est disposée selon un angle aigu (β) par rapport à la surface de base (14).

4. Vitre (3) de véhicule selon l'une des revendications 1 à 3,
**caractérisée en ce que** les DEL (11) sont fixées sur un support (16) et les éléments d'injection de lumière (12) sont positionnés et fixés sur le support (16) en association avec la DEL (11) respective.

5. Vitre (3) de véhicule selon la revendication 4, **caractérisée en ce qu'**un module d'éclairage (21), qui comprend le support (16) avec les DEL (11) et les éléments d'injection de lumière (12), est fixé sur la couche de guidage de lumière (10) au moyen des éléments d'injection de lumière (12).

6. Vitre (3) de véhicule selon la revendication 4 ou 5,
**caractérisée en ce que** chaque élément d'injection de lumière (12) comporte au moins un élément de fixation (18) destiné à être installé sur le support (16).

7. Vitre (3) de véhicule selon l'une des revendications 4 à 6,
**caractérisée en ce que** les éléments d'injection de lumière (12) maintiennent le support (16) sensiblement parallèlement à la surface intérieure (17) de la couche de guidage de lumière (10) et que les DEL (11) émettent de la lumière émise latéralement par elles dans les éléments d'injection de lumière (12) par les surfaces de DEL (15).

8. Vitre (3) de véhicule selon l'une des revendications 4 à 7,
**caractérisée en ce que** les DEL (11) sont disposées entre le support (16) et la couche de guidage de lumière (10) et à proximité de la couche de guidage de lumière (10) ou directement sur la couche de guidage de lumière (10).

9. Vitre (3) de véhicule selon l'une des revendications 4 à 6,
**caractérisée en ce que** les éléments d'injection de lumière (12) maintiennent le support (16') sensiblement perpendiculairement à la surface intérieure (17) de la couche de guidage de lumière (10) et que les DEL (11') émettent de la lumière émise par elles sur le côté supérieur dans les éléments d'injection de lumière (12) par les surfaces de DEL (15).

10. Vitre (3) de véhicule selon l'une des revendications 4 à 9,
**caractérisée en ce qu'**un couvercle (25, 25') est relié au support (16, 16').

11. Vitre (3) de véhicule selon la revendication 10, **caractérisée en ce que** le couvercle (25, 25') est maintenu ou fixé sur la couche de guidage de lumière (10) et maintient en positionnement le support (16, 16') avec les éléments d'injection de lumière (12) sur la couche de guidage de lumière (10) ou
**que** le couvercle (25, 25') est fixé sur le support (16, 16') et est maintenu en positionnement par le support (16, 16') sur la couche de guidage de lumière (10), le support (16, 16') étant fixé sur la couche de guidage de lumière (10) au moyen des éléments d'injection de lumière (12).

12. Vitre (3) de véhicule selon l'une des revendications 2 à 5,
**caractérisée en ce que** chaque élément d'injection de lumière (12) appliqué par moussage, par moulage par injection, par collage ou formé d'un seul tenant avec la couche de guidage de lumière (10) comporte une fixation (49) et les fixations (49) positionnent le support (16) portant les DEL (11) sur les éléments d'injection de lumière (12).

13. Procédé de fabrication d'une vitre (3) de véhicule avec un dispositif d'éclairage (4) selon l'une des revendications 1 à 3,
**caractérisé en ce**
**qu'**un support (16, 16') avec des DEL (11) installées sur celui-ci est fourni,
**que** les éléments d'injection de lumière (12) sont reliés de manière solidaire au support (16, 16'), respectivement en association avec l'une des DEL (11) et
**qu'**un module d'éclairage (21), qui comprend le support (16, 16') avec les DEL (11) et les éléments d'injection de lumière (12), est fixé sur la couche de guidage de lumière (10) par couplage optique des éléments d'injection de lumière (12) à la couche de guidage de lumière (10) en ce que
- les éléments d'injection de lumière (12) sont fixés sur la couche de guidage de lumière (10) ou
- un couvercle (25, 25'), qui est relié au support (16, 16') et qui recouvre le module d'éclairage (21), est fixé sur la couche de guidage de lumière (10) et positionne et fixe ainsi le support (16, 16').

14. Procédé de fabrication d'une vitre (3) de véhicule avec un dispositif d'éclairage (4) selon l'une des revendications 1 à 5 et 12,
**caractérisé en ce**
**que** la couche de guidage de lumière (10) est formée avec des éléments d'injection de lumière (12) formés d'un seul tenant ou
**que** les éléments d'injection de lumière (12) sont appliqués par moussage sur la couche de guidage de lumière (10),
**que** les éléments d'injection de lumière (12) sont pourvus de fixations (49) pour un support (16) portant les DEL (11), et
**que** le support (16) est fixé sur les fixations (49), les DEL (11) étant positionnées sur les éléments d'injection de lumière (12).
